# EUROPÄISCHE PATENTSCHRIFT

(11) **EP 0 726 231 B1**
(45) Veröffentlichungstag und Bekanntmachung des Hinweises auf die Patenterteilung: **16.05.2001**
(21) Anmeldenummer: 96101026.1
(22) Anmeldetag: 25.01.1996
(51) Int. Cl.: C03B 5/00, C03B 3/02, C03B 5/235, F23G 5/32, F23G 5/08

(54) **Verfahren und Vorrichtung zur thermischen Behandlung von Feststoffen**
Process and apparatus for the thermic treatment of solid materials
Procédé et appareil pour le traitement thermique de matières solides

(30) Priorität: 08.02.1995 DE 19504082
(43) Veröffentlichungstag der Anmeldung: 14.08.1996
(73) Patentinhaber: DEUTZ Aktiengesellschaft, 51063 Köln (DE)
(72) Erfinder: Schleimer, Friedrich, D-51069 Köln (DE); Ameis, Dieter, D-41542 Dormagen (DE)

(56) Entgegenhaltungen:
- EP-A- 0 436 759
- EP-A- 0 520 533
- DE-A- 3 536 635
- FR-A- 918 989
- US-A- 2 115 125
- US-A- 3 510 289
- US-A- 4 544 394

## Beschreibung

Die Erfindung ist auf eine Vorrichtung und ein Verfahren zur Hochtemperaturbehandlung von feinkörnigen, bei Behandlungstemperaturen schmelzflüssige Produkte ergebenden Feststoffen wie z. B. Nichteisenmetallerzkonzentraten, Abfallstoffen oder dergleichen gerichtet mit einem Schmelzzyklon und einer Trennkammer, in der die im Schmelzzyklon erhaltenen Reaktionsprodukte, Schmelze und Abgas eingebracht und voneinander getrennt werden, wobei zwischen dem Schmelzzyklon und der Trennkammer ein Überleitelement angeordnet ist, das den Schmelzzyklonaustrag mit der Trennkammereintragsöffnung verbindet.

Aus der deutschen Offenlegungsschrift DE-A-37 29 798 ist eine Vorrichtung zur Verhüttung von schmelzbaren Stoffen bekannt, bei der ein Schmelzzyklon oberhalb eines als Trennkammer dienenden Ofens angeordnet ist, wobei ein teilweise in die Ofendecke eingeführtes senkrechtes Überleitelement die Austragsöffnung des Schmelzzyklons mit der Eintragsöffnung des Ofens verbindet.

Beim Betrieb dieser bekannten Vorrichtung fließt die im Schmelzzyklon gebildete Schmelze zunächst an der Innenwand des Schmelzzyklons und über die Innenwand des Überleitelements nach unten und tropft anschließend über den gesamten Rand des Überleitelements verteilt von der Ofendecke mit hoher Fallhöhe, beispielsweise 2 m, in das unten im Ofen angesammelte Schmelzbad.

Das im Schmelzzyklon gebildete Abgas strömt in gleicher Richtung wie die Schmelze nach unten in den Ofen und wird dann dort seitlich aus dem Ofen abgeführt. Dadurch, daß der Abgasstrom die Fallstrecke der Schmelze durchkreuzt, können feine Schmelztröpfchen vom Abgas mitgerissen werden, wodurch der Staubanteil im Abgas unerwünscht erhöht wird.

Ein weiterer Nachteil des vertikal in die Ofendecke eingeführten Überleitelements ist, daß bei notwendigen Reparaturarbeiten am Überleitelement zunächst der gesamte Zyklon entfernt und später dann wieder auf das Überleitelement aufgesetzt werden muß, so daß ein unverhältnismäßig hoher Reparaturaufwand resultiert.

Es ist Aufgabe der Erfindung, eine Vorrichtung und ein Verfahren zu schaffen, mit der bzw. mit dem die aus der DE-A-37 29 798 aus einem Schmelzzyklon und einem Ofen bestehende bekannte Vorrichtung und die hiermit durchgeführte thermische Behandlung von feinkörnigen, bei Behandlungstemperaturen schmelzflüssige Produkte ergebenden Feststoffen unter Vermeidung der aufgezeigten Nachteile mit Vorteil weiter ausgebildet wird und in der bzw. mit dem eine weitergehende thermische Behandlung der im Schmelzzyklon erzeugten Produkte durchgeführt werden kann.

Die gestellte Aufgabe wird vorrichtungsmäßig gelöst mit den Merkmalen des Anspruchs 1 und verfahrensmäßig mit den Maßnahmen des Anspruchs 11.

Durch die erfindungsgemäße Anordnung des Überleitelements wird die im Schmelzzyklon gebildete Schmelze, die nach unten aus der Schmelzzyklonaustragsöffnung in das Überleitelement fließt, im Überleitelement auf der vertikalen bis gekrümmten unteren Innenseite angereichert und fließt in einem gemeinsamen Strahl mit nur noch geringer Fallhöhe in das Schmelzbad der Trennkammer, während das Abgas weitgehend frei von Schmelztröpfchen in einem spitzen Winkel auf die Schmelzbadoberfläche aufprallt.

Durch die Anreicherung von Schmelze auf der unteren Innenseite des Überleitelements findet bereits im Überleitelement eine weitgehende Auftrennung von Schmelze und Abgas statt, wodurch die gewünschte vollständige Trennung von Schmelze und Abgas in der Trennkammer begünstigt wird. Da die nur noch mit geringer Fallhöhe in die Schmelzkammer einfließende Schmelze nun nicht mehr vom Abgasstrom durchkreuzt wird, wird mit Vorteil der Anteil an Schmelztröpfchen in Abgas erheblich erniedrigt.

Der mit hoher Geschwindigkeit schräg mit spitzem Winkel auf die Schmelzbadoberfläche auftreffende Abgasstrahl bewirkt ähnlich wie eine Aufblaslanze eine Durchwirbelung der Schmelze und erzeugt in der Schmelze einen konvektiven Wärmestrom.

Durch die zyklonartig ausgebildet Trennkammer gemäß der Erfindung wird das Abgas dann spiralförmige entlang der Innenwand der Trennkammer zur Austragsöffnung geführt, wobei noch im Abgas vorhandene restliche Schmelztröpfchen an der Innenwand der Trennkammer abgeschieden werden.

Zusammengefaßt besteht die Vorrichtung gemäß der Erfindung also aus zwei hintereinandergeschalteten Zyklonen, wobei im ersten Zyklon, dem Schmelzzyklon, die gewünschten thermischen Reaktionen mit Bildung der Schmelze erfolgt und im zweiten Zyklon die weitgehende vollständige Abtrennung der Schmelze vom Abgas erfolgt und in dem zusätzlich eine thermische Nachbehandlung der Schmelze und/oder des Abgases durchgeführt wird.

Gemäß einer vorteilhaften Ausgestaltung der Erfindung ist bei liegend mit horizontaler Achse angeordneter Trennkammer
- die Trennkammereintrittsöffnung im Bereich der Abgasaustrittsöffnung angeordnet, um in dem dann weitgehend vom Abgas freien Bereich der Trennkammer zwischen der Eintragsöffnung und der Schmelzaustragsöffnung eine thermische Nachbehandlung der Schmelze, beispielsweise mittels Aufblaslanzen, die sekantial in die Trennkammer in diesem weitgehend abgasfreiem Bereich eingeführt sind, durchzuführen
- oder aber die Trennkammereintragsöffnung ist im Bereich der Schmelzaustragsöffnung angeordnet, um in der Trennkammer im Bereich zwischen der Eintragsöffnung und der Abgasaustrittsöffnung eine thermische Nachbehandlung des Abgases, beispielsweise eine Nachverbrennung mit Hilfe von Zusatzbrenner, mittels der sekantial zusätzlicher Brennstoff in die Trennkammer eingedüst wird, durchzuführen.

Nach einer weiteren vorteilhaften Ausgestaltung der Erfindung ist mindestens einer dieser Zusatzbrenner so angeordnet, daß der eingedüste Brennstoff bzw. das Brennstoff-Verbrennungssauerstoff-Gemisch direkt auf die aus dem Überleitelement herausfließende Schmelze auftrifft und somit auf die Schmelze die Wirkung einer Aufblaslanze ausübt.

Im Bedarfsfall ist es gemäß der Erfindung auch möglich, den Schmelzzyklon oberhalb der Trennkammer so anzuordnen, daß das Überleitelement vertikal von oben mit der liegenden Trennkammer tangential bzw. sekantial verbunden ist.

Die thermische Nachbehandlung der Schmelze und/oder des Abgases in der zyklonartigen Trennkammer ist gemäß der Erfindung nicht auf eine liegend angeordnete Trennkammer beschränkt, sondern sie kann auch in gleicher Weise in einer stehend mit vertikaler Achse angeordneten Trennkammer durchgeführt werden.

Vorteilhaft ist der Krümmungsteil des unabhängig von der liegenden oder stehenden Anordnung der zyklonartigen Trennkammer seitlich die Trennkammer mit der Schmelzzyklonunterseite verbindenden Überleitelements gemäß der Erfindung mittels Schraubverbindungen befestigt, so daß bei notwendigen Reparaturen am Überleitelement nur dieses Teil entfernt werden muß und eine zeit- und kostenaufwendige Entfernung des Schmelzzyklons nicht mehr erforderlich wird.

Weitere Vorteile, Einzelheiten und Merkmale der Erfindung werden im folgenden anhand von in schematischen Zeichnungsfiguren dargestellten Ausführungsbeispielen näher erläutert.

Es zeigen:
- Fig. 1:: einen Längsschnitt durch eine liegend angeordnete Trennkammer mit Schmelzzyklon und Einrichtungen zur thermischen Nachbehandlung des Abgases;
- Fig. 2:: eine teilweise geschnittene Draufsicht auf die Vorrichtung gemäß Fig. 1;
- Fig. 3:: einen Querschnitt durch die Vorrichtung gemäß Fig. 1 mit Schnitt durch den Schmelzzyklon;
- Fig. 4:: einen Querschnitt durch die Vorrichtung gemäß Fig. 1 mit Schnitt durch einen Zusatzbrenner;
- Fig. 5:: einen Längsschnitt durch eine liegend angeordnete Trennkammer mit Schmelzzyklon und Einrichtungen zur thermischen Nachbehandlung der Schmelze;
- Fig. 6:: eine teilweise geschnittene Draufsicht auf die Vorrichtung gemäß Fig. 5;
- Fig. 7:: einen Querschnitt durch die Vorrichtung gemäß Fig. 5 mit Schnitt durch eine Aufblaslanze;
- Fig. 8:: einen Querschnitt durch eine liegend angeordnete Trennkammer mit Schmelzzyklon und einer Einrichtung zur thermischen Nachbehandlung der frei fließenden Schmelze;
- Fig. 9:: einen Längsschnitt durch eine stehend angeordnete Trennkammer mit Schmelzzyklon;
- Fig. 10:: einen Querschnitt durch die Trennkammer gemäß Fig. 9;
- Fig. 11:: einen Querschnitt durch einen Schmelzzyklon.

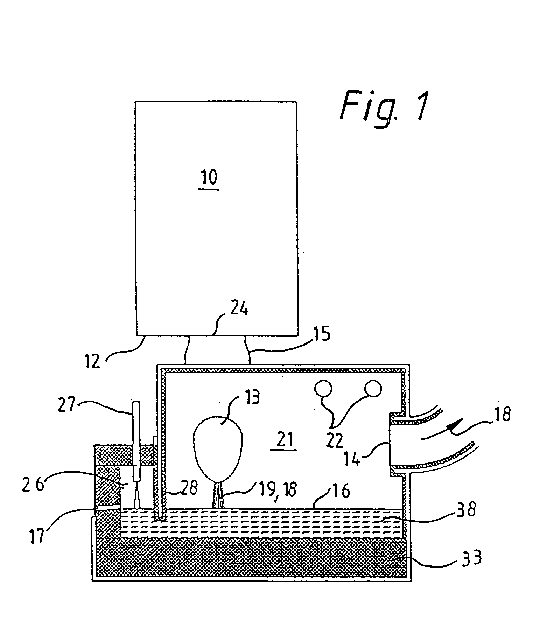

Wie die Fig. 1 bis 4 zeigen, ist der Schmelzzyklon (10) mit seinen sekantialen Brenner (30) für die Eindüsung der thermisch zu behandelnden Feststoffe sowie für - falls erforderlich - Verbrennungssauerstoff bzw. -luft und ggf. zusätzlichem Brennstoff seitlich oberhalb einer liegenden zyklonartigen Trennkammer (21) mit horizontaler Achse angeordnet. Die an der Unterseite (12) des Schmelzzyklons (10) angeordnete axiale Austrittsöffnung (24) für die im Schmelzzyklon (10) gebildeten Reaktionsprodukte, Schmelze (19) und Abgas (18), ist mit einem in gekrümmter Bahn schräg nach unten verlaufenden Überleitelement (15) verbunden. Durch dieses Überleitelement (15) werden die Reaktionsprodukte zu einer seitlich an der Trennkammer (21) angeordneten Eintragsöffnung (13) geführt, wobei sich die Schmelze (19) an der unteren Innenseite des Überleitelements (15) anreichert, wodurch somit bereits weitgehend eine Trennung der Schmelze (19) vom Abgas (18) erfolgt.

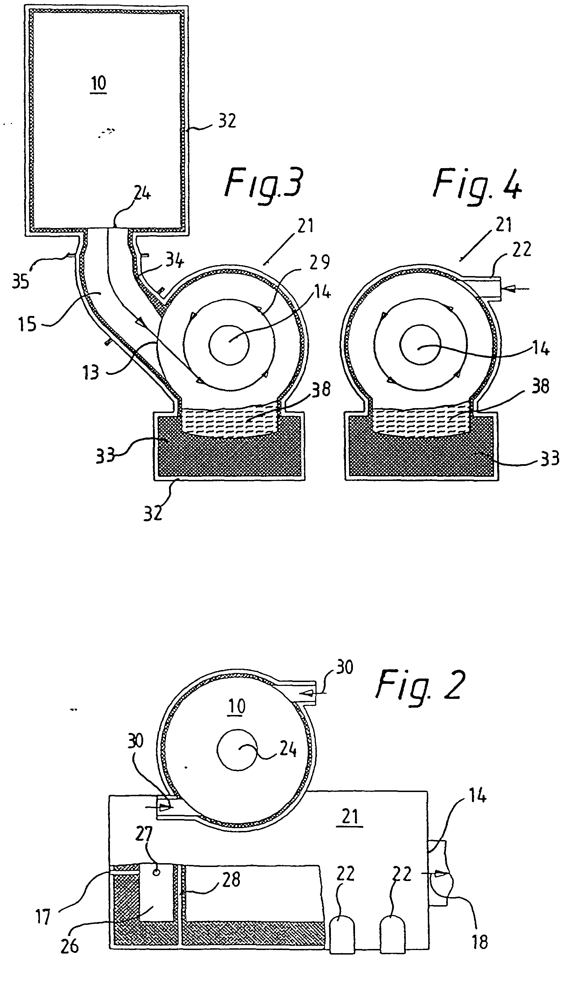

Die Schmelze (19) fließt dann in einem örtlich begrenzten Strom mit geringer Fallhöhe in das aus der Schmelze (19) gebildete Schmelzbad (38) im unteren Teil der Trennkammer (21), während das Abgas (18) mit hoher Geschwindigkeit, bereits weitgehend frei von Schmelze (19), mit spitzem Winkel auf die Schmelzbadoberfläche (16) auftrifft. Von dort wird der Abgasstrom (18), bedingt durch die zyklonartige Ausbildung der Trennkammer (21), entsprechend der Pfeilrichtung (29) in den Fig. 3 und 4 umgelenkt und zur Abgasaustrittsöffnung (14) geführt, von wo er zu einer in der in der Zeichnungsfigur nicht dargestellten Abgasbehandlungsvorrichtung zwecks beispielsweise Abkühlung und Entstaubung gelangt.

Durch die Rotation der in der Trennkammer (21) oberhalb des Schmelzbades (38) vorhandenen Gase, insbesondere des Abgases (18), werden die im Gasstrom noch enthaltenen Schmelztröpfchen, bedingt durch die auf sie einwirkende Zentrifugalkraft gegen die Innenwand der Trennkammer (21) geschleudert und dabei aus dem Gasstrom abgetrennt.

Die sich im unteren Teil der Trennkammer (21) sammelnde Schmelze (19) bildet dort ein Schmelzbad (38) und wird über den syphonartig ausgebildeten Austragsbereich (26) durch eine Austragsöffnung (17) aus der Trennkammer (21) kontinuierlich abgezogen, oder aber - in der Zeichnung nicht dargestellt - sie wird gemeinsam mit dem Abgas (18) einer anderen Abstichsart, z. B. Schlackengranulation zugeführt.

Die syphonartige Ausbildung des Austragsbereiches (26) ist erforderlich, um einen unerwünschten Abgasaustritt aus der Austragsöffnung (17) zu unterbinden. Zu diesem Zweck taucht ein Teil (28) der Trennkammerwand in das Schmelzbad (38) ein und bildet zur Austragsöffnung (17) hin einen gasdichten Abschluß.

Um den kontinuierlichen Austrag der Schmelze (19) aufrechtzuerhalten, wird der Austragsbereich (26) mit einem Zusatzbrenner (27) beheizt, so daß die Schmelze hier, da abgetrennt vom heißen Abgasstrom, nicht "einfrieren" kann.

Im Ausführungsbeispiel der Fig. 1 bis 4 ist die Eintragsöffnung (13) in der Nähe des Schmelzaustragsbereiches (26) angeordnet, und im oberen Bereich der Trennkammer (21) sind zwischen der Eintragsöffnung (13) und der Abgasaustrittsöffnung (14) sekantial zwei Zusatzbrenner (22) eingeführt, durch die tangential zum Abgasstrom (18) zusätzlicher Brennstoff und Verbrennungssauerstoff bzw. -luft eingedüst wird, wodurch im Abgas (18) vorhandene Bestandteile thermisch nachbehandelt werden (nachverbrannt, aufoxidiert, verflüchtigt etc.).

Wegen der hohen Behandlungstemperaturen in der Vorrichtung gemäß der Erfindung sind Schmelzzyklon (10), Überleitelement (15) und Trennkammer (21) mit einem Doppelmantel (32) bzw. Rohrkühlsystem mit Wasserkühlung oder Dampfkühlung versehen. Zusätzlich besitzt die Trennkammer (21) im Bereich des Kontakts mit der Schmelze (19) eine feuerfeste Auskleidung (33), um Wärmeverlusten vorzubeugen und eine rasche Abkühlung der Schmelze (19) zu verhindern.

Wie insbesondere der Fig. 3 zu entnehmen ist, ist das Krümmungsteilstück (34) des Überleitelements (15) über eine Flanschverbindung (35) mittels Schrauben (in der Zeichnung nicht dargestellt) eingepaßt. Dieses Teilstück kann bei notwendigen Reparaturen ohne großen Zeitaufwand und ohne den Schmelzzyklon (10) abzubauen seitlich herausgenommen (in der Zeichnung nach links) und in gleicher Weise auch einfach wieder seitlich eingeschoben werden.

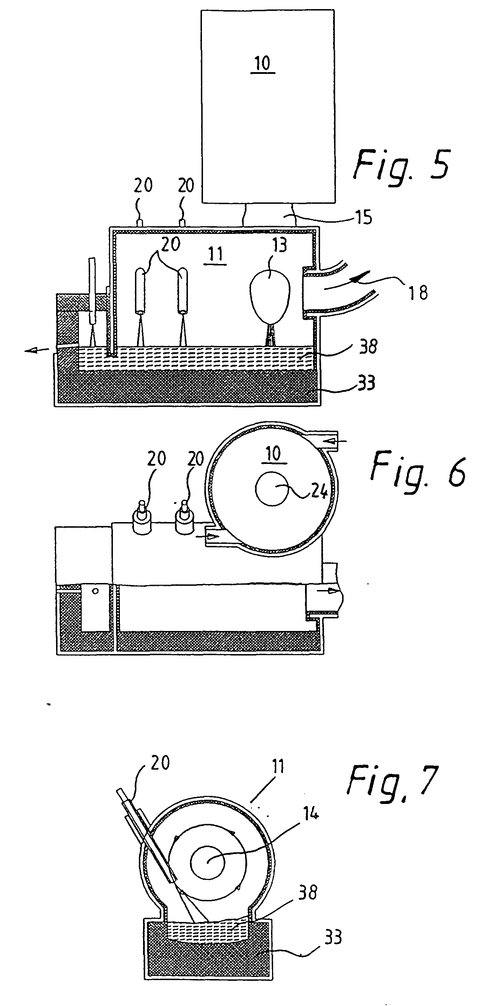

Bei dem Ausführungsbeispiel der Fig. 5 bis 7 ist bei sonst gleicher Ausführung nur die Lage des Schmelzzyklons (10) gegenüber der Trennkammer (11) so verändert, daß die Eintragsöffnung (13) nun in unmittelbarer Nähe der Abgasaustrittsöffnung (14) angeordnet ist, wodurch ein größerer Bereich der Trennkammer (11) weitgehend frei von Abgas (18) bleibt, so daß dieser Bereich zur thermischen Nachbehandlung der Schmelze (19) genutzt werden kann. Zu diesem Zweck sind zwei Aufblaslanzen (20) sekantial in die Trennkammer eingeführt, die tangential zur Gasströmung (29) in der Trennkammer (11) im spitzen Winkel auf die Schmelzbadoberfläche (16) ein für die thermische Nachbehandlung der Schmelze geeignetes Gasgemisch aufdüsen.

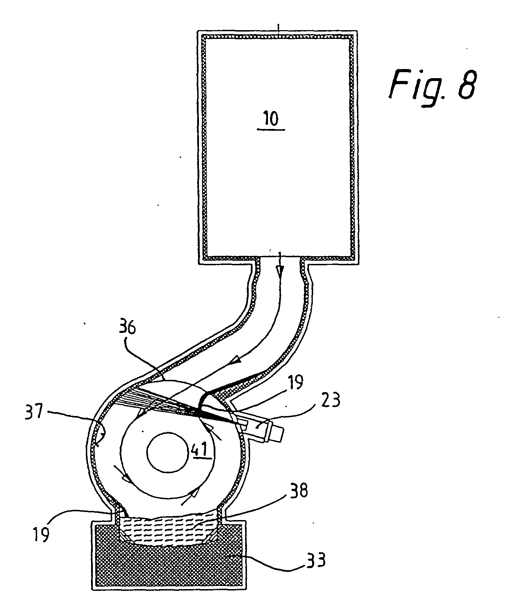

Durch eine örtlich höhere Anordnung der Eintragsöffnung (36) in einem weiteren Ausführungsbeispiel wird, wie die Fig. 8 zeigt, erreicht, daß die Schmelze (19) nun nicht mehr mit geringer Fallhöhe, sondern von oben in die Trennkammer (41) einfließt. Ein sekantial in diesem Bereich der Trennkammer (41) eingeführter Brenner (23) trifft mit seinem Wirkstrahl im rechten Winkel auf die frei fließende Schmelze (19), wodurch diese zerstäubt und gegen die dem Brenner (23) gegenüberliegende Trennkammerinnenwand (39) geschleudert wird und an dieser Innenwand (37) entlang nach unten mit nun nur noch geringer Fallhöhe in das Schmelzbad (38) einfließt. Die auf diese Weise erzielte thermische Nachbehandlung der Schmelze (19) ist besonders effektiv, da nicht nur der Oberflächenbereich des Schmelzbades (38), wie bei den Aufblaslanzen (20) der Fig. 5 bis 7, mit dem Reaktionsgas, sondern die gesamte Schmelze (19), aufgetrennt in feine Tropfen, mit dem Reaktionsgas des Brenners (23) beaufschlagt wird.

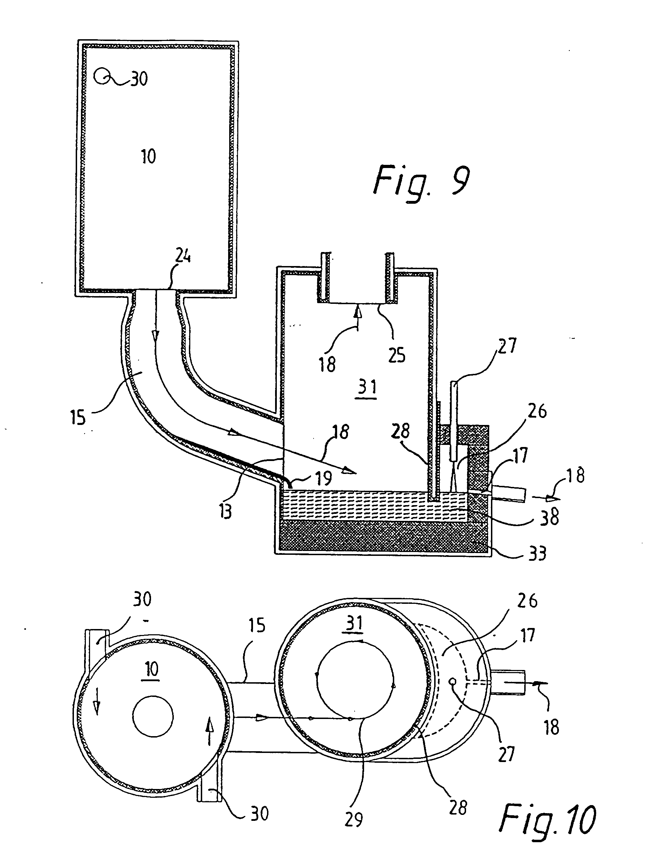

In einem weiteren Ausführungsbeispiel der Erfindung (Fig. 9 und 10) ist die Trennkammer (31) stehend mit vertikaler Achse angeordnet, so daß hier die in die Trennkammer (31) schräg nach unten auf die Schmelzbadoberfläche (16) auftreffenden Abgase (18) entsprechend der zyklonartigen Ausbildung der Trennkammer (31) in Pfeilrichtung (29) umgelenkt und zur oberen Abgasaustrittsöffnung (25) geführt werden. Ein Vorteil dieser Anordnung ist, daß durch den Abgasstrom die heiße Schmelze unter der Trennkammerwand (28) hindurch in den syphonartigen Schmelzaustragsbereich (26) gedrückt wird, was den kontinuierlichen Austrag der Schmelze (19) deutlich erleichtert und auch ohne zusätzlichen Brenner (27) das "Einfrieren" der Schmelze in diesem Bereich verhindert.

Auch bei dieser stehenden Anordnung der Trennkammer (31) kann eine thermische Nachbehandlung der Schmelze (19) und/oder des Abgases (18) durchgeführt werden, wenn an entsprechenden Stellen der Trennkammer (31) (in den Fig. 9 und 10 nicht gestellt) Aufblaslanzen und/oder Brenner installiert sind.

Auf die Verbesserung der thermischen Behandlung insgesamt sowie auf die Senkung der Betriebskosten kann gemäß der Erfindung auch durch eine geeignete Maßname bereits bei der thermischen Behandlung im Schmelzzyklon Einfluß genommen werden.

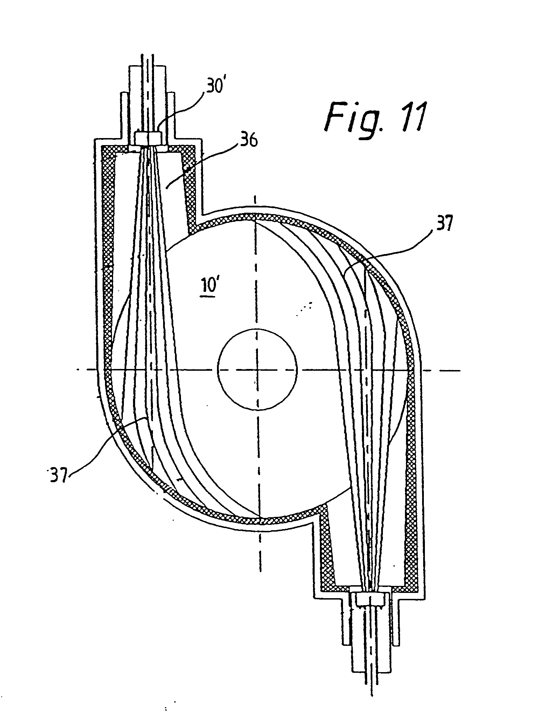

Wie die Fig. 11 zeigt, ist die Brennkammer (36) mit dem Brenner (30') des Schmelzzyklons (10') außerhalb des Schmelzzyklons (10') nach hinten verlängert, so daß die Brennstrecke insgesamt bis zum Auftreffen des Brennerstrahls (37) auf die Schmelzzykloninnenwand verlängert wird.

Neben einer verlängerten Reaktionsstrecke und somit verbesserter thermischer Einwirkung bei gröberen Feststoffpartikeln wird insbesondere eine gegenseitig geringere Beeinflussung der einander in einer Ebene gegenüberliegenden Brenner (30') erreicht, wodurch die Ansatzbildung an den Brennern (30') (Brennermund) sowie an der Zykloninnenwand deutlich herabgesetzt wird.

## Patentansprüche

1. Vorrichtung zur Hochtemperaturbehandlung von feinkörnigen, bei Behandlungstemperaturen schmelzflüssige Produkte ergebenden Feststoffen wie z. B. Nichteisenmetallerzkonzentraten, Abfallstoffen oder dergleichen, mit einem Schmelzzyklon (10) und einer Trennkammer (11, 21, 31, 41), in der die im Schmelzzyklon erhaltenen Reaktionsprodukte Schmelze und Abgas eingebracht und voneinander getrennt werden, wobei zwischen dem Schmelzzyklon und der Trennkammer ein Überleitelement (15) angeordnet ist, das den Schmelzzyklonaustrag mit der Trennkammereintragsöffnung verbindet, gekennzeichnet durch
a) einen Schmelzzyklon (10), der so angeordnet ist, daß das Überleitelement (15) von der Unterseite (12) des Schmelzzyklons (10) vertikal bis schräg nach unten in einer gekrümmten Bahn zur seitlichen Eintragsöffnung (13) der Trennkammer (11, 21, 31, 41) führt, und
b) eine zyklonartig ausgebildete Trennkammer (11, 21, 31, 41) mit einer unmittelbar oberhalb der Schmelzbadoberfläche (16) seitlich sekantial bzw. tangential angeordneten Eintragsöffnung (13) für die Reaktionsprodukte, einer axialen Austragsöffnung (14, 24) für das Abgas (18) und einer Austragsöffnung (17) für die Schmelze (19).

2. Vorrichtung nach Anspruch 1, dadurch gekennzeichnet, daß der Schmelzeaustragsbereich (26) der Trennkammer (11, 21, 31, 41) syphonartig ausgebildet ist, um einen gasdichten Austrag der Schmelze (19) zu ermöglichen.

3. Vorrichtung nach Anspruch 1 oder 2, dadurch gekennzeichnet, daß die zyklonartige Trennkammer (11) liegend mit horizontaler Achse angeordnet ist und sich die Eintragsöffnung (13) im Bereich der der Schmelzeaustragsöffnung (17) gegenüberliegenden Abgasaustragsöffnung (14) befindet.

4. Vorrichtung nach Anspruch 3, dadurch gekennzeichnet, daß zwischen der Eintragsöffnung (13) und der Schmelzaustragsöffnung (17) in die Trennkammer (11) sekantial mindestens eine Aufblaslanze (20) zur thermischen Nachbehandlung der Schmelze (19) eingeführt ist.

5. Vorrichtung nach Anspruch 1 oder 2, dadurch gekennzeichnet, daß die zyklonartige Trennkammer (21) liegend mit horizontaler Achse angeordnet ist und sich die Eintragsöffnung (13) im Bereich der Schmelzaustragsöffnung (17) befindet.

6. Vorrichtung nach Anspruch 5, dadurch gekennzeichnet, daß zwischen der Eintragsöffnung (13) und der Abgasaustrittsöffnung (14) mindestens ein Zusatzbrenner (22) zur tangentialen bzw. sekantialen Eindüsung von zusätzlichem Brennstoff in der Trennkammer (21) angeordnet ist.

7. Vorrichtung nach Anspruch 3, 4, 5 oder 6, dadurch gekennzeichnet, daß mindestens ein Zusatzbrenner (23) sekantial seitlich so in die Trennkammer (41) eingeführt ist, daß seine Wirkung einer Aufblaslanze entspricht und eine thermische Nachbehandlung der im Bereich des Brenners (23) frei fließenden Schmelze (19) erfolgt.

8. Vorrichtung nach Anspruch 1 oder 2, dadurch gekennzeichnet, daß die zyklonartige Trennkammer (31) stehend mit vertikaler Achse angeordnet und mit einer oberen axialen Abgasaustragsöffnung (24) und einer der Schmelzaustragsöffnung (17) gegenüberliegenden Eintragsöffnung (13) für die Reaktionsprodukte des Schmelzzyklons (10) versehen ist.

9. Vorrichtung nach einem oder mehreren der vorhergehenden Ansprüche, dadurch gekennzeichnet, daß der Krümmungsteil (34) des Überleitelements (15) mit dem Schmelzzyklon (10) und der Trennkammer (11, 21, 31, 41) durch Schraubverbindungen lösbar verbunden ist, so daß dieses Krümmungsteil (34) des Überleitelements (15) nach Lösen der Schrauben seitlich herausgezogen werden kann.

10. Vorrichtung nach einem oder mehreren der vorhergehenden Ansprüche, dadurch gekennzeichnet, daß die Brennkammer (36) des Brenners (30) die seitlich sekantial bzw. tangential in den Schmelzzyklon (10') eingeführt sind, so außerhalb des Schmelzzyklons (10') nach hinten verlängert sind, daß sich eine Verlängerung des Brennerstrahls (37) ergibt.

11. Verfahren zur Hochtemperaturbehandlung von feinkörnigen, bei Behandlungstemperaturen schmelzflüssige Produkte ergebenden Feststoffen wie z. B. Nichteisenmetallerzkonzentraten, Abfallstoffen oder dergleichen, zum Betreiben der Vorrichtung nach einem oder mehreren der vorhergehenden Ansprüche, dadurch gekennzeichnet, daß die aus dem Schmelzzyklon (10) ausgetragenen Reaktionsprodukte Schmelze (19) und Abgas (18) durch das Überleitelement (15) in einer vertikalen bis gekrümmten Bahn schräg nach unten in die Trennkammer (11, 21, 31, 41) geführt werden, so daß das Abgas (18) zunächst in hoher Geschwindigkeit strahlförmig schräg auf die Schmelzbadoberfläche (16) auftrifft und dann, bedingt durch die zyklonartige Form der Trennkammer (11, 21, 31, 41), spiralförmig durch die Trennkammer (11, 21, 31, 41) zur Abgasaustrittsöffnung (14, 24) geführt wird.

12. Verfahren nach Anspruch 11, dadurch gekennzeichnet, daß in der Trennkammer (11, 21, 31) eine thermische Nachbehandlung der Schmelze (19) und/oder des Abgases (18) durchgeführt wird.

## Claims

1. An arrangement for the high temperature processing of fine grain solids, which result in molten products at the processing temperatures such as non-ferrous metal concentrates, waste products or similar, with a smelting cyclone (10) and a separation chamber (11, 21, 31, 41) into which the reaction products contained in the smelting cyclone, melt and exhaust gas, are introduced and separated from each other, whereby a transfer element (15) is arranged between the smelting cyclone and the separation chamber, which joins the outlet of the smelting cyclone to the input opening of the separation chamber, characterised by
a) a smelting cyclone (10), which is arranged such that the transfer element (15) leads from the underside of the smelting cyclone (10) vertically downwards into a curved track at an angle into the side opening (13) of the separation chamber (11, 21, 31, 41) and
b) a separation chamber (11, 21, 31, 41), configured in the form of a cyclone, with an input opening (13) for the reaction products arranged to the side, secantially or tangentially immediately above the surface (16) of the melt bath, an axial extraction opening (14, 24) for the exhaust gas (18) and an extraction opening (17) for the melt (19).

2. An arrangement according to Claim 1, characterised in that the melt extraction region (26) of the separation chamber (11, 21, 31, 41) is formed as a syphon, so as to facilitate the gas-tight extraction of the melt (19).

3. An arrangement according to Claim 1 or Claim 2, characterised in that the cyclone type separation chamber (11, 21, 31, 41) is arranged lying with a horizontal axis and the input opening (13) is positioned in the region of the melt extraction opening (17) lying on the opposite side to the exhaust gas extraction opening (14).

4. An arrangement according to Claim 3, characterised in that at least one thermic lance (20) is introduced secantially into the separation chamber (11) between the input opening (13) and the melt extraction opening (17) for the thermal processing of the melt (19).

5. An arrangement according to Claim 1 or Claim 2, characterised in that the cyclone type separation chamber (21) is arranged lying with a horizontal axis and the input opening (13) is positioned in the region of the melt extraction opening (17).

6. An arrangement according to Claim 5, characterised in that at least one additional burner (22) is arranged in the separation chamber (21) between the input opening (13) and the exhaust gas extraction opening (14) for the tangential or secantial spraying of additional fuel into the separation chamber (21).

7. An arrangement according to Claim 3, 4, 5 or 6, characterised in that at least one additional burner (23) is introduced into the separation chamber (41) secantially at the side such that its effect corresponds to a thermic lance and thermal processing of the free flowing melt in the region of the burner (23) is effected.

8. An arrangement according to Claim 1 or Claim 2, characterised in that the cyclone type separation chamber (31) is arranged standing with a vertical axis and is provided with an upper axial exhaust gas extraction opening (24) and an input opening (13) for the reaction products of the smelting cyclone (10), positioned opposite to the melt extraction opening (17).

9. An arrangement according to one or more of the foregoing Claims,
characterised in that the curved part (34) of the transfer element (15) is detachably joined to the smelting cyclone (10) and the separation chamber (11, 21, 31, 41) by screw connectors, so that this curved part (34) of the transfer element (15) can be drawn out to the side after loosening of the screws.

10. An arrangement according to one or more of the foregoing Claims,
characterised in that the combustion chamber (36) of the burner (30) which is introduced secantially or tangentially at the side into the smelting cyclone (10') is extended backwards outside the smelting cyclone (10') so that a lengthening of the burner stream (37) results.

11. A method for the high temperature processing of fine grain solids, which result in molten products at the processing temperatures such as non-ferrous metal concentrates, waste products or similar, for the operation of the arrangement according to one or more of the foregoing Claims,
characterised in that the reaction products, melt (19) and exhaust gas (18) extracted from the smelting cyclone (10) are taken by the transfer element (15) vertically downwards into a curved track at an angle into the separation chamber (11, 21, 31, 41) so that the exhaust gas first meets the melt bath surface (16) at an angle, at high speed in the form of a stream and then, owing to the cyclone type conformation of the separation chamber (11, 21, 31, 41), is taken in the form of a spiral through the separation chamber (11, 21, 31, 41) to the exhaust gas extraction opening (14, 24).

12. A method according to Claim 11, characterised in that thermal processing of the melt (19) and/or of the exhaust gas (18) is performed in the separation chamber (11, 21, 31).

## Revendications

1. Dispositif de traitement à haute température de produits en forme de grains fins, en fusion aux températures de traitement, pour obtenir des produits solides tels que par exemple des concentrés de métaux non ferreux, des déchets ou des produits analogues, comprenant un cyclone de fusion (10) et une chambre séparatrice (11, 21, 31, 41) dans laquelle arrivent les produits de réaction (produits en fusion et gaz d'échappement) obtenus dans le cyclone de fusion pour les séparer, et entre le cyclone de fusion et la chambre séparatrice, on a un élément de transfert (15) reliant la sortie du cyclone de fusion à l'orifice d'entrée de la chambre séparatrice,
caractérisé en ce que
a) le cyclone de fusion (10) est disposé pour que l'élément de transfert (15) passe du côté inférieur (12) du cyclone de fusion (10) verticalement jusqu'à une position en biais en descendant selon un chemin cintré vers l'orifice d'entrée latéral (13) de la chambre séparatrice (11, 21, 31, 41), et
b) la chambre séparatrice (11, 21, 31, 41) est en forme de cyclone, avec un orifice d'entrée (13) prévu directement au-dessus de la surface du bain (16), dans une position sécante ou tangentielle pour les produits de réaction, un orifice de sortie (14, 24) axial pour les gaz d'échappement (18) et un orifice de sortie (17) pour le produit en fusion (19) .

2. Dispositif selon la revendication 1,
caractérisé en ce que la zone de sortie de bain (26) de la chambre séparatrice (11, 21, 31, 41) est en forme de siphon pour permettre une sortie du produit en fusion (19) de façon étanche aux gaz.

3. Dispositif selon l'une quelconque des revendications 1 ou 2,
caractérisé en ce que
la chambre séparatrice (11) en forme de cyclone est disposée dans la position couchée avec un axe horizontal et l'orifice d'entrée (13) relie l'orifice de sortie des gaz d'échappement (14) en regard de l'orifice de sortie de produit (17).

4. Dispositif selon la revendication 3,
caractérisé en ce qu'
au moins une lance d'insufflation (20), pour assurer un post traitement thermique du produit en fusion (19) est introduite dans la chambre séparatrice (11) suivant une direction sécante, entre l'orifice d'entrée (13) et l'orifice de sortie du produit en fusion (17).

5. Dispositif selon l'une quelconque des revendications 1 ou 2,
caractérisé en ce que
la chambre séparatrice (21) en forme de cyclone est disposée couchée avec un axe horizontal et l'orifice d'entrée (13) se trouve au niveau de l'orifice de sortie (17) du produit en fusion

6. Dispositif selon la revendication 5,
caractérisé en ce qu'
au moins un brûleur complémentaire (22) est disposé dans une position tangente ou séquentielle pour sa buse d'injection de carburant supplémentaire dans la chambre séparatrice (21), entre l'orifice d'entrée (13) et l'orifice de sortie de gaz d'échappement (14).

7. Dispositif selon l'une quelconque des revendications 3, 4, 5, 6,
caractérisé en ce qu'
au moins un brûleur complémentaire (23) est introduit par le côté dans la chambre séparatrice (41) suivant une direction sécante et son effet correspond à celui d'une lance d'insufflation, et un post-traitement thermique est appliqué au produit en fusion (19) fondu qui coule librement dans la zone du brûleur (23).

8. Dispositif selon l'une quelconque des revendications 1 ou 2,
caractérisé en ce que
la chambre séparatrice (31) en forme de cyclone est disposée debout avec un axe vertical et comporte un orifice de sortie de gaz d'échappement (24) axial, situé en haut, et un orifice d'entrée (13), en regard de l'orifice de sortie de produit en fusion (17), pour les produits de réaction du cyclone de fusion (10).

9. Dispositif selon l'une ou plusieurs des revendications précédentes,
caractérisé en ce que
la partie de coudée (34) de l'élément de transfert (15) est reliée de manière amovible au cyclone de fusion (10) et à la chambre séparatrice (11, 21, 31, 41) par des liaisons à vis, ce qui permet d'extraire latéralement cette partie coudée (34) de l'élément de transfert (15) après avoir desserré les vis.

10. Dispositif selon l'une ou plusieurs des revendications précédentes,
caractérisé en ce que
la chambre de combustion (36) du brûleur (30) introduit tangentiellement ou suivant une direction sécante, latérale, dans le cyclone de fusion (10'), est prolongée en dehors du cyclone de fusion (10') vers l'arrière pour prolonger le faisceau du brûleur (37).

11. Procédé de traitement à température élevée de produits à grains fins, fusibles aux températures de traitement, donnant des matières solides comme par exemple des concentrés de métaux non ferreux, des déchets et/ou des produits analogues pour la mise en oeuvre du dispositif selon l'une ou plusieurs des revendications précédentes,
caractérisé en ce que
les produits de réaction extraits du cyclone de fusion (10), les produits en fusion (19) et les gaz d'échappement (18) sont conduits par l'élément de transfert (15) sur une trajectoire verticale jusqu'à cintrée, en biais vers le bas dans la chambre séparatrice (11, 21, 31, 41), de sorte que les gaz d'échappement (18) arrivent tout d'abord selon un jet à grande vitesse en biais sur la surface supérieure du bain (16) et du fait de la forme de cyclone de la chambre séparatrice (11, 21, 31, 41), les gaz d'échappement sont conduits suivant une trajectoire en spirale à travers la chambre séparatrice (11, 21, 31, 41) jusque vers l'orifice de sortie des gaz d'échappement (14, 24).

12. Procédé selon la revendication 11,
caractérisé en ce qu'
on effectue un post-traitement thermique du produit en fusion (19) et/ou des gaz d'échappement (18) dans la chambre séparatrice (11, 21, 31).
